# EUROPEAN PATENT SPECIFICATION

(11) **EP 0 654 509 B1**
(45) Date of publication and mention of the grant of the patent: **17.01.2001**
(21) Application number: 94308683.5
(22) Date of filing: 24.11.1994
(51) Int. Cl.: C09C 1/36

(54) **Durable pigmentary titanium dioxide and methods of producing the same**
Dauerhaftes Titandioxidpigment und Verfahren zu seiner Erzeugung
Dioxyde de titane pigmentaire durable et procédés pour le produire

(30) Priority: 24.11.1993 US 156891
(43) Date of publication of application: 24.05.1995
(73) Proprietor: KERR-MCGEE CHEMICAL LLC, Oklahoma City, Oklahoma 73102 (US)
(72) Inventor: Brand, John R., Oklahoma City, Oklahoma 73132 (US); Baldwin, Roger A., Warr Acres, Oklahoma 73132 (US); Brownbridge, Thomas Ian, Oklahoma City, Oklahoma 73762 (US)
(74) Representative: Cresswell, Thomas Anthony

(56) References cited:
- EP-A- 0 073 340
- EP-A- 0 244 180
- FR-A- 1 218 185
- US-A- 2 885 366
- PATENT ABSTRACTS OF JAPAN vol. 15, no. 141 (C-0822) 10 April 1991 & JP-A-03 023 221 (ISHIHARA SANGYO KAISHA) 31 January 1991

## Description

This invention relates to improved titanium dioxide pigments and their production.

Pigmentary titanium dioxide, particularly rutile titanium dioxide, is utilized in a wide variety of products in which a high degree of durability is required. For example, rutile titanium dioxide pigments are commonly used in paints, plastics, and paper laminates. However, when such products are exposed to ultraviolet radiation, degradation and discoloration of the pigment is accelerated. Thus, there is a need for an improved titanium dioxide pigment having a high durability whereby the effective lives of products including the pigment are extended.

FR-1218185 relates to a method for preparing a rutile pigment having good photochemical stability which comprises slurrying a rutile pigment in water and treating the slurry with a mixture of water-soluble silicate, an aluminium salt and a cerium salt to produce a rutile pigment having a mixed oxide coating.

The present invention meets the need described above and overcomes shortcomings of the prior art by providing pigmentary titanium dioxide having an improved durability, i.e., an improved resistance to photo chemical degradation. The durable pigmentary titanium dioxide of this invention is comprised of rutile titanium dioxide particles having thereon a deposit of cerium oxide and then a coating of dense amorphous silica deposited thereon. The cerium oxide is present on the titanium dioxide particles in an amount in the range of from about 0.01% to about 1.0% by weight of titanium dioxide and the dense amorphous silica is present in an amount in the range of from about 1% to about 8% by weight of titanium dioxide.

The titanium dioxide particles having cerium oxide and then dense amorphous silica deposited thereon also preferably include an outer coating of hydrous alumina deposited thereon. The hydrous alumina is preferably present on the particles in an amount in the range of from about 2% to about 4% by weight of titanium dioxide.

The improved highly durable titanium dioxide pigment of this invention is produced by forming an aqueous slurry of rutile titanium dioxide particles and adding a water soluble cerium compound thereto which, on reaction with an acid or alkali, deposits cerium oxide on the titanium dioxide particles. An acid or alkali is added to the slurry to cause the deposit of cerium oxide on the titanium dioxide particles. A water soluble silicate and a mineral acid are next added to the slurry to thereby deposit dense amorphous silica on the titanium dioxide particles. If desired, the deposition order can be revised, i.e., the dense amorphous silica can be deposited first followed by the cerium oxide.

The preferred deposition of an outer coating of hydrous alumina on the titanium dioxide particles having cerium oxide and dense amorphous silica deposited thereon is performed by adding an acid or alkaline aluminum compound to the slurry which, on reaction with an alkali or acid, deposits hydrous alumina on the particles. The alkali or acid is added to the slurry either simultaneously with or after the addition of the aluminum compound.

Thus, it is a general object of the present invention to provide improved highly durable pigmentary titanium dioxide and methods of producing the same.

Other and further objects, features, and advantages of the present invention will be readily apparent to those skilled in the art upon reading the following description of the preferred embodiments.

The durable pigmentary titanium dioxide of this invention is comprised of particles of rutile titanium dioxide having cerium oxide and then dense amorphous silica deposited thereon. The particles preferably also include an outer coating of hydrous alumina to improve the dispersibiity and optical properties of the pigment.

The cerium oxide is present on the titanium dioxide particles in an amount in the range of from about 0.01% to about 1.0% by weight of titanium dioxide, the dense amorphous silica is present on the particles in an amount in-the range of from about 1% to about 8% by weight of titanium dioxide and the outer coating of hydrous alumina, when included on the particles, is deposited thereon in an amount, expressed as aluminum oxide, in the range of from about 2% to about 4% by weight of titanium dioxide.

The rutile titanium dioxide particles are preferably obtained by the "chloride" process, i.e., by the vapor phase oxidation of titanium tetrachloride, preferably in the presence of about 1.5% by weight of alumina to ensure a high conversion to the rutile crystalline form. Rutile titanium dioxide has a better durability and resistance to photochemical degradation than does the anatase crystalline form of titanium dioxide.

The rutile titanium dioxide particles have cerium oxide deposited thereon in a preferred amount of in the range of from about 0.02% to about 0.5% by weight of titanium dioxide. It is not necessary that the cerium oxide completely coat each particle, but only that some cerium oxide is deposited on the particle.

The titanium dioxide particles further include a non-porous coating of dense amorphous silica deposited thereon in the general amount given above. A preferred amount is in the range of from about 1% to about 6% by weight of titanium dioxide.

As mentioned above, it is preferred that the particles including cerium oxide and dense silica have an outer coating of hydrous alumina deposited thereon in the general amount, expressed as aluminum oxide, in the range of from about 2% to about 4% by weight of titanium dioxide. More preferably, the titanium dioxide particles include hydrous alumina in an amount in the range of from about 2.5% to about 3.5% by weight of titanium dioxide.

The above-described durable pigmentary titanium dioxide is produced in accordance with the present invention by first forming an aqueous slurry of rutile titanium dioxide particles. The dispersion of the particles in water can be facilitated by first adding a dispersing agent to the water, e.g., sodium hydroxide and sodium hexametaphosphate, followed by adding the titanium dioxide particles. If desired, the slurry can be subjected to wet milling using a sand mill followed by screening to remove grit and sand residues.

After the aqueous slurry has been formed, a water soluble cerium compound is added to the slurry which, upon reaction with an acid or an alkali, deposits cerium oxide on the titanium dioxide particles. Examples of acid cerium compounds which can be used are the mineral acid salts of cerium such as cerium sulfate or cerium nitrate. The acid cerium compound used can be caused to deposit cerium oxide by reaction with an alkali such as an alkali metal hydroxide. Alternatively, alkaline cerium salts such as cerium ammonium sulfate or nitrate can be employed which react with an acid, e.g., sulfuric acid, to deposit cerium oxide. Preferably, the water soluble cerium compound is cerium nitrate and the alkali reacted therewith is an aqueous sodium hydroxide solution. The cerium compound used is added to the aqueous slurry in a general amount, expressed as cerium oxide, in the range of from about 0.01% to about 1.0% by weight of titanium dioxide particles in the slurry, preferably in an amount in the range of from about 0.02% to about 0.5% by weight of titanium dioxide. The acid or alkali used is added to the slurry in an amount sufficient to react with the cerium compound and deposit cerium oxide on the particles.

After the deposit of cerium oxide has been accomplished, a coating of dense silica which is substantially non-porous, amorphous, and continuous over the titanium dioxide particles is applied to the particles. The dense amorphous silica is formed in the aqueous slurry from a solution of water soluble silicate while maintaining the slurry at a pH greater than 8, preferably at a pH in the range of from about 9 to about 11. The deposition of the dense silica can be accomplished by adding a water soluble silicate to the slurry and adding a mineral acid either simultaneously therewith or subsequently thereto. Preferably, an aqueous solution of a water soluble silicate is added to the slurry while simultaneously adding a mineral acid solution thereto to maintain the pH of the slurry at a level within the range of from about 9 to about 10.5 whereby dense amorphous silica is deposited on the particles. The aqueous solution of water soluble silicate is preferably a sodium silicate solution and the mineral acid is preferably a sulfuric acid solution. The water soluble silicate is added to the slurry in a general amount, expressed as silica, in the range of from about 1% to about 8% by weight of the titanium dioxide particles in the slurry, preferably in an amount in the range of from about 1% to about 6% by weight of titanium dioxide. The mineral acid used is added to the slurry in a sufficient amount to maintain the pH at the level mentioned above.

During the deposition of the cerium oxide and dense amorphous silica on the titanium dioxide particles, the aqueous slurry is continuously agitated and maintained at a temperature within the range of from about 60° C to about 100° C, preferably at about 70° C. Also, while the method as described above indicates that the cerium oxide is deposited on the titanium dioxide particles prior to the dense silica, it is to be understood that the reverse order of deposition can be used, i.e., the coating of dense amorphous silica can be deposited on the particles first followed by the deposition of cerium oxide on the coated particles, or the cerium oxide and the dense silica can be deposited simultaneously.

Following the deposition of the cerium oxide and dense silica on the particles, it is preferred that an outer coating of hydrous alumina is formed on the particles to improve dispersibility and optical properties thereof. This is accomplished by adding an acid or alkaline aluminum compound which, upon reaction with an alkali or acid, respectively, deposits hydrous alumina on the particles. Examples of acid aluminum compounds which can be utilized are aluminum salts of mineral acids, e.g., aluminum sulfate or aluminum nitrate. Examples of alkaline aluminum compounds are alkali metal aluminates, e.g., sodium aluminate. The acid or alkaline aluminum compound is added to the slurry in an amount, expressed as alumina, in the general range of from about 2% to about 4% by weight of titanium dioxide in the slurry, more preferably in the range of from about 2.5% to about 3.5%. The alkali or acid is added in a sufficient amount to cause hydrous alumina to be precipitated on the particles either simultaneously with or subsequently to the addition of the aluminum compound. Preferably, the aluminum compound is sodium aluminate added as an aqueous solution, and the sodium aluminate is simultaneously reacted with an aqueous sulfuric acid solution.

After completion of the deposition of cerium oxide, dense amorphous silica, and, optionally, hydrous alumina on the titanium dioxide particles, the particles are preferably filtered, washed, and dried. If desired, the dried product can be crushed, treated with a conditioning agent such as trimethylolethane and fluid energy milled.

The amounts of and the various reagents which are usable to produce the pigments of the present invention will be readily ascertainable by those skilled in the art, as will the concentrations of the various solutions employed, etc.

The following examples are given to further illustrate the improved titanium dioxide pigments and methods of the present invention.

### Example 1

Rutile titanium dioxide obtained by the vapor phase oxidation of titanium tetrachloride in the presence of 1.5% by weight of alumina was slurried in water with sufficient sodium hexametaphosphate and sodium hydroxide to give a stable dispersion of 34% solids by weight.

This slurry, after being subjected to wet milling with a sandmill, was diluted to 18.7% solids and screened through a 325 standard mesh screen to remove grit and any sand residues.

A portion of the slurry, 4610 grams, containing the equivalent of 864 grams of titanium dioxide was then placed in a suitable vessel equipped with an agitator and heating source. The temperature was then raised to 70° C. The pH of the dispersion was 8.8.

To this agitated, dispersed slurry was added, over a 10 minute period, a solution of ceric nitrate (33 ml) at a concentration of 260 grams/liter of cerium oxide. After addition of the ceric nitrate, the pH of the dispersion measured 1.0. Following a 10 minute aging period, the pH of the dispersion was raised to 9.4 over a 14 minute period by the addition of 144.7 ml of sodium hydroxide solution (110 grams/liter).

The dispersion was allowed to age for 15 minutes. 240.3 ml of a solution of sodium silicate containing the equivalent of 142.8 grams/liter of silica at a silica:sodium oxide ratio of 2.86:1 was then added over a 58 minute period, during which time the pH of the dispersion was held constant at pH 9.4 by the concurrent addition of 72.4 ml of 10 volume % sulfuric acid.

Following a 30 minute aging period, the pH was adjusted down to 7.5 by the addition of 26.7 ml of 10 volume % sulfuric acid. The temperature of the dispersion was then lowered from 70° C to 50° C and maintained there for the remainder of the process.

A solution of sodium aluminate (201.9 ml) containing 93.5 grams/liter of alumina and 174.4 grams/liter of sodium oxide was then added to the cooled dispersion over a period of 20 minutes. When the pH of the dispersion reached 10.0, 10 volume % sulfuric acid was added concurrently to maintain the pH in the range of 10 to 10.5. A total of 216.9 ml was used. After the addition of the alumina was complete, the dispersion was aged for a period of 79 minutes, during which time the pH decreased from 10.2 to 9.2. The pH was then lowered to 7.5 using a 21.6 ml of 10 volume % sulfuric acid. Following a further 30 minute aging period, and a minor pH adjustment to return the pH to 7.5, the slurry was washed to remove soluble salts and then dried at 105° C. The dried product was crushed, treated with a 0.35% trimethylolethane and fluid energy milled.

The photocatalytic activity of the resulting product was measured using the method described, for example, in T.I. Brownbridge and J.R. Brand, Photocatalytic Activity of Titanium Dioxide Pigment, Surface Coatings Australia, September 1990, pages 6-11 (paper presented at the 32nd Annual SCAA Convention, Perth, WA, September 1990). This test basically involves the steps of: (1) placing about 0.2 g of the TiO₂ product in about 40 mL of spectroscopic-grade isopropanol; (2) exposing the TiO₂/isopropanol composition to ultra-violet light; (3) monitoring the formation of acetone in the test composition over time; (4) determining, by linear regression analysis, a linear rate of acetone formation in the test composition; and (5) multiplying the rate value by 10³. The resulting value is proportional to the accelerated weathering performance of TiO2 pigment product.

The inventive pigment product produced in this example was determined to have a photocatalytic activity value of 0. This result is indicative of a very high degree of durability.

### Example 2

In this second example, in which no cerium oxide was used, a further portion of rutile titanium dioxide slurry prepared as described in Example 1, consisting of 4615 grams of slurry equivalent to 865 grams of titanium dioxide was used. Using the same vessel as described in Example 1, the slurry was heated to 70° C. The pH was 8.8. A quantity of sodium hydroxide (4.5 ml) was added to raise the pH to 9.4. To this agitated, dispersed slurry was added 242 ml of the same solution of sodium silicate as used in Example 1. This was equivalent to 34.6 grams of silica. The addition of this solution was made over a period of 60 minutes. During this addition, the pH was maintained constant by the concurrent addition of 76.4 ml of 10 volume % sulfuric acid. At the conclusion of the addition, the dispersion was allowed to age for a period of 30 minutes. The pH of the dispersion was then lowered to 7.5 by the addition of 29 ml of 10 volume % sulfuric acid. The temperature of the dispersion was then lowered to 50° C.

203.5 ml of the same sodium aluminate solution as used in Example 1 were then added over a period of 21 minutes. When the pH of the dispersion reached 10.0, 10 volume % sulfuric acid was added concurrently so as to maintain a pH in the range of 10 - 10.5. After the addition of alumina was complete, the batch was allowed to age for 45 minutes. During this time, the pH increased from 10.3 to 10.4. After this aging period, the pH was lowered to 7.5 by the addition of 106.9 ml of 10 volume % sulfuric acid over a period of 30 minutes. After 30 minutes of aging and a minor pH adjustment to return the pH to 7.5, the batch was filtered, washed, and dried at 105° C. The dried product was crushed and treated with a 0.35% trimethylolethane and fluid energy milled. The photocatalytic activity of this sample was 1.0, which was poorer than the cerium oxide treated sample prepared in Example 1.

### Example 3

In this third example, the beneficial effect of even lower levels of CeO₂ was demonstrated. 836 grams of rutile titanium dioxide slurry prepared as previously described, but at a slurry concentration of 30% solids or 1.3 specific gravity, was heated to 80° C. The pH of the dispersion was 8.4. The pH was raised to 10.0 by the addition of 9.5 ml of sodium hydroxide. To the heated dispersion was added 1.6 ml of the same solution of ceric nitrate as used in Example 1. The addition time was one minute. The pH was maintained constant by the concurrent addition of 4.1 ml of 200 grams/liter sodium hydroxide solution. The dispersion was aged for a 15 minute period. The pH of the dispersion was then reduced to 9.4 by the addition of 0.4 ml of 95 weight % sulfuric acid.

154.8 ml of a solution of sodium silicate at a concentration of 216 grams/liter silica and with a silica:sodium oxide ratio of 3.22 was then added over a 121 minute period. During this time, the pH was maintained constant by the addition of 7.2 ml of 95 weight % sulfuric acid. On completion of the silica precipitation, the dispersion was aged for 15 minutes. The pH was then lowered to 8.0 by adding 2.1 ml of 95 weight % sulfuric acid.

73.6 ml of sodium aluminate solution at 250 grams/liter of alumina was added over a period of 20 minutes. During the sodium aluminate addition, the pH was maintained constant at 8.0 by the concurrent addition of 19.3 ml of 95 weight % sulfuric acid. The pH of the dispersion was then reduced to 5.6 and the dispersion was allowed to age for 15 minutes. After a further minor adjustment in pH to return the pH to 5.6, the batch was filtered, washed, and dried at 105° C.

The dry product was then crushed, treated with 0.35% trimethylolethane, and fluid energy milled. The photocatalytic activity of this sample was measured at 0.47 which was better than the value obtained in Example 2.

### Example 4

In a further example in which no cerium oxide was used in conjunction with dense silica, 824 grams of rutile titanium dioxide prepared as described in Example 1, but at a solids concentration of 30% and a specific gravity of 1.3, was heated to a temperature of 80° C. After addition of 2.9 ml of sodium hydroxide solution, the pH was raised from 8.5 to 9.4.

To the dispersion was added 152.6 ml of sodium silicate, the same as described in Example 3, over a period of 120 minutes. During this time, the pH was maintained constant by the concurrent addition of 7.0 ml of 95 weight % sulfuric acid. Following the silica addition, the dispersion was allowed to age for 15 minutes. The pH was then lowered to 8.0 by the addition of 2.0 ml of 95 weight % sulfuric acid.

72.5 ml of the same solution of sodium aluminate as used in Example 3 was then added over a 20 minute period. During this time, the pH was maintained constant by the concurrent addition of 16.0 ml of 95 weight % sulfuric acid. At the conclusion of the sodium aluminate addition, the pH was lowered to 5.6 using 1.5 ml of 95 weight % sulfuric acid. After a 15 minute aging period and a further minor adjustment in pH, the batch was filtered, washed, and dried at 105° C. The dried product was then crushed, treated with 0.35% trimethylolethane, and fluid energy milled.

The photocatalytic activity of this sample was measured at 1.16 which was equivalent to the value obtained for the pigment from Example 2, but poorer than pigments from Examples 1 and 3.

### Example 5

In this example, cerium oxide was deposited after the dense silica had been deposited. 838 grams of titanium dioxide as described in Example 1, but at a solids concentration of 30% and a specific gravity of 1.3, were placed in the treatment vessel and the temperature was raised to 80° C. Following the addition of 3.2 ml of 200 grams/liter sodium hydroxide solution, the pH was raised from 8.6 to 9.4.

To this dispersion was added 155.2 ml of the same solution of sodium silicate as used in Example 3 over a period of 120 minutes. During the addition, the pH was maintained constant by the concurrent addition of 7.2 ml of 95 weight % sulfuric acid. After the silica addition was complete, the slurry was allowed to age for 15 minutes.

6.4 ml of the same solution of ceric nitrate as used previously was then added over a 3.5 minute period, during which time the pH was maintained constant at 9.4 by concurrent addition of 13 ml of 200 grams/liter sodium hydroxide solution. The dispersion was then aged for a period of 15 minutes, after which the pH was lowered to 8.0 by the addition of 1.7 ml of 95 weight % sulfuric acid.

Sodium aluminate (73.7 ml), which was the same as used in Example 3, was then added to the slurry over a 21 minute period. During this time, the pH was maintained constant at pH 8.0 by the concurrent addition of 16.1 ml of 95 weight % sulfuric acid. At the completion of the alumina addition, the pH was lowered to 5.6 by the addition of 1.8 ml of 95 weight % sulfuric acid and allowed to age for 15 minutes.

After the aging period and a minor adjustment in pH, the product was filtered, washed, and dried at 105° C. The dry pigment was crushed and treated with 0.35% trimethylolethane and then fluid energy milled. The photocatalytic activity of this sample was measured at 0.13.

The test results set forth in Examples 1 - 5 above are summarized in the following table.

| Example No. | Deposited Compounds % by Wt. TiO₂ | | | Order of CeO₂ Deposition | Photocatalytic Activity Measurement |
|---|---|---|---|---|---|
| | SiO₂ | CeO₂ | Al₂O₃ | | |
| 1 | 4.0 | 1.0 | 2.2 | Before SiO₂ | 0 |
| 2 | 4.0 | -- | 2.2 | -- | 1.0 |
| 3 | 4.0 | 0.05 | 2.2 | Before SiO₂ | 0.47 |
| 4 | 4.0 | -- | 2.2 | -- | 1.16 |
| 5 | 4.0 | 0.2 | 2.2 | After SiO₂ | 0.13 |

From the foregoing examples and the above table, it can be seen that the pigmentary titanium dioxide of the present invention has low photocatalytic activity, and, therefore, high durability.

Thus, the present invention is well adapted to carry out the objects and attain the ends and advantages mentioned as well as those which are inherent therein.

## Claims

1. Titanium dioxide pigment comprising particles of rutile titanium dioxide having thereon a deposit of cerium oxide in an amount of from 0.01% to 1.0% by weight of titanium dioxide and then a coating of dense amorphous silica in an amount of from 1% to 8% by weight of titanium dioxide.

2. The pigment of claim 1, wherein the amount of cerium oxide is from 0.02% to 0.5% by weight of titanium dioxide.

3. The pigment of claim 1 or 2, wherein the amount of dense amorphous silica is from 1% to 6% by weight of titanium dioxide.

4. The pigment of claim 1, 2 or 3, having an outer coating of hydrous alumina in an amount, expressed as aluminum oxide, of from 2% to 4% by weight of titanium dioxide.

5. The pigment of claim 4, wherein the hydrous alumina is present in an amount, expressed as aluminum oxide, of from 2.5% to 3.5% by weight of titanium dioxide.

6. A method of producing a titanium dioxide pigment as defined in claim 1, which comprises adding to an aqueous slurry of rutile titanium dioxide particles:
(a) a water soluble cerium compound which on reaction with an acid or alkali yields cerium oxide, the cerium compound being added in an amount, expressed as cerium oxide, of from 0.01% to 1.0% by weight of titanium dioxide in the slurry;
(b) an acid or an alkali in an effective amount for converting the cerium compound in (a) to cerium oxide, thereby depositing cerium oxide on the titanium dioxide particles; and
(c) a water soluble silicate and a mineral acid thereby depositing, at a pH of at least about 8, dense amorphous silica on the titanium dioxide particles, the water soluble silicate being added in an amount, expressed as silica, of from 1% to 8% by weight of titanium dioxide in the slurry.

7. The method of claim 6, wherein the water soluble cerium compound in (a) is cerium nitrate.

8. The method of claim 6 or 7, wherein in (b) aqueous sodium hydroxide solution is added.

9. The method of claim 6, 7 or 8, wherein in (c) the water soluble silicate is an aqueous solution of sodium silicate and the mineral acid is an aqueous sulfuric acid solution.

10. The method of any one of claims 7 to 9, wherein cerium nitrate is added in an amount, expressed as cerium oxide, of from 0.02% to 0.5% by weight of titanium dioxide in the slurry.

11. The method of claim 9 or 10, wherein the aqueous solution of sodium silicate is added in an amount, expressed as silica, of from 1% to 6% by weight of titanium dioxide in the slurry.

12. The method of any one of claims 6 to 11, wherein the water soluble silicate and mineral acid in (c) are added to the aqueous slurry of rutile titanium dioxide particles prior to the water soluble cerium compound in (a) and the acid or alkali in (b).

13. The method of any one of claims 6 to 12, further comprising adding an aqueous solution of an acid or alkaline aluminum compound followed respectively by an aqueous solution of an alkali or acid in an amount effective for reacting with the aluminum compound thereby causing an outer coating of hydrous alumina to be deposited, the aqueous solution of the aluminum compound being added in an amount, expressed as alumina, of from 2% to 4% by weight of titanium dioxide in the slurry.

14. The method of claim 13, wherein the aluminum compound is added in an amount, expressed as alumina, of from 2.5% to 3.5% by weight of titanium dioxide in the slurry.

15. The method of claim 13 or 14, wherein an aqueous solution of sodium aluminate is added followed by an aqueous sulfuric acid solution.

16. The method of any one of claims 6 to 15, further comprising filtering, washing and drying the resulting titanium dioxide pigment.

## Patentansprüche

1. Titandioxidpigment, umfassend Partikel aus Rutil-Titandioxid mit einer Abscheidung von Ceroxid darauf in einer Menge von 0,01 Gew.-% bis 1,0 Gew.-% des Titandioxids und nachfolgend eine Beschichtung mit dichtem, amorphen Siliciumdioxid in einer Menge von 1 Gew.-% bis 8 Gew.-% des Titandioxids.

2. Pigment gemäß Anspruch 1, wobei die Menge an Ceroxid von 0,02 Gew.-% bis 0,5 Gew.-% des Titandioxids beträgt.

3. Pigment gemäß Anspruch 1 oder 2, wobei die Menge des dichten, amorphen Siliciumdioxids von 1 bis 6 Gew.-% des Titandioxids beträgt.

4. Pigment gemäß Anspruch 1, 2 oder 3 mit einer äußeren Beschichtung von wasserhaltigem Aluminiumoxid in einer Menge, ausgedrückt als Aluminiumoxid, von 2 Gew.-% bis 4 Gew.-% des Titandioxids.

5. Pigment gemäß Anspruch 4, wobei das wasserhaltige Aluminiumoxid in einer Menge, ausgedrückt als Aluminiumoxid, von 2,5 Gew.-% bis 3,5 Gew.-% des Titaniumoxids vorliegt.

6. Verfahren zur Herstellung eines Titandioxidpigments gemäß Anspruch 1, das, zu einer wässrigen Aufschlämmung von Rutil-Titandioxidpartikeln, die Zugabe umfaßt von:
(a) einer wasserlöslichen Cerverbindung, die auf Reaktion mit einer Säure oder einem Alkali Ceroxid ergibt, wobei die Cerverbindung in einer Menge, ausgedrückt als Ceroxid, von 0,01 Gew.-% bis 1,0 Gew.-% des Titandioxids in der Aufschlämmung zugegeben wird;
(b) einer Säure oder einem Alkali in einer wirksamen Menge zur Umwandlung der Cerverbindung in (a) zu Ceroxid, wodurch Ceroxid auf den Titandioxidpartikeln abgeschieden wird; und
(c) einem wasserlöslichen Silikat und einer Mineralsäure, wodurch bei einem pH von wenigstens ungefähr 8 dichtes, amorphes Siliciumdioxid auf den Titandioxidpartikeln abgeschieden wird, und wobei das wasserlösliche Silikat in einer Menge zugegeben wird, ausgedrückt als Siliciumdioxid, von 1 Gew.-% bis 8 Gew.-% des Titandioxids in der Aufschlämmung.

7. Verfahren gemäß Anspruch 1, wobei die wasserlösliche Cerbverbindung in (a) Cernitrat ist.

8. Verfahren gemäß Anspruch 6 oder 7, wobei in (b) eine wässrige Natriumhydroxidlösung zugegeben wird.

9. Verfahren gemäß Anspruch 6, 7 oder 8, wobei in (c) das wasserlösliche Silikat eine wässrige Lösung von Natriumsilikat ist und die Mineralsäure eine wässrige Schwefelsäurelösung.

10. Verfahren gemäß einem der Ansprüche 7 bis 9, wobei Cernitrat in einer Menge zugegeben wird, ausgedrückt als Ceroxid, von 0,02 Gew.-% bis 0,5 Gew.-% des Titandioxids in der Aufschlämmung.

11. Verfahren gemäß Anspruch 9 oder 10, wobei die wässrige Lösung von Natriumsilikat in einer Menge zugegeben wird, ausgedrückt als Siliciumdioxid, von 1 Gew.-% bis 6 Gew.-% des Titandioxids in der Aufschlämmung.

12. Verfahren gemäß einem der Ansprüche 6 bis 11, wobei das wasserlösliche Silikat und die Mineralsäure in (c) zu der wässrigen Aufschlämmung von Rutil-Titandioxidpartikeln vor der wasserlöslichen Cerverbindung in (a) und der Säure oder dem Alkali in (b) gegeben wird.

13. Verfahren gemäß einem der Ansprüche 6 bis 12, ferner die Zugabe einer wässrigen Lösung einer sauren oder einer alkalischen Aluminiumverbindung, jeweils gefolgt von einer wässrigen Lösung eines Alkalis oder einer Säure in einer zur Umsetzung mit der Aluminiumverbindung wirksamen Menge und dadurch bewirken eine Abscheidung einer äußeren Beschichtung von wässrigem Aluminiumoxid, wobei die wässrige Lösung der Aluminiumverbindung in einer Menge, ausgedrückt als Aluminiumoxid, von 2 bis 4 Gew.-% des Titandioxidsin der Aufschlämmung zugegeben wird.

14. Verfahren gemäß Anspruch 13 wobei die Aluminiumverbindung in einer Menge zugegeben wird, ausgedrückt als Aluminiumoxid, von 2,5 Gew.-% bis 3,5 Gew.-% des Titandioxids in der Aufschlämmung.

15. Verfahren gemäß Anspruch 13 oder 14, wobei eine wässrige Lösung von Natriumaluminat zugegeben wird, gefolgt von einer wässrigen Schwefelsäurelösung.

16. Verfahren gemäß einem der Ansprüche 6 bis 15, ferner ein Filtern, Waschen und Trocknen des resultierenden Titandioxidpigments umfassend.

## Revendications

1. Pigment à base de dioxyde de titane, comprenant des particules de dioxyde de titane de type rutile sur lesquelles est déposé de l'oxyde de cérium en une proportion de 0,01 % à 1,0 % en poids par rapport au dioxyde de titane et ensuite, un revêtement de silice amorphe dense en une proportion de 1 % à 8 % en poids par rapport au dioxyde de titane.

2. Pigment selon la revendication 1, dans lequel la proportion d'oxyde de cérium est de 0,02 % à 0,5 % en poids par rapport au dioxyde de titane.

3. Pigment selon la revendication 1 ou 2, dans lequel la proportion de silice amorphe dense est de 1 % à 6 % en poids par rapport au dioxyde de titane.

4. Pigment selon l'une quelconque des revendications 1, 2 ou 3, ayant un revêtement extérieur d'alumine hydratée en une proportion, exprimée sous forme d'oxyde d'aluminium, de 2 % à 4 % en poids par rapport au dioxyde de titane.

5. Pigment selon la revendication 4, dans lequel l'alumine hydratée est présente en une proportion, exprimée sous forme d'oxyde d'aluminium, de 2,5 % à 3,5 % en poids par rapport au dioxyde de titane.

6. Procédé de préparation d'un pigment à base de dioxyde de titane tel que défini à la revendication 1, qui comprend l'addition à une suspension aqueuse de particules de dioxyde de titane de type rutile :
(a) d'un composé du cérium hydrosoluble qui, par réaction avec un acide ou un alcali, produit de l'oxyde de cérium, le composé du cérium étant ajouté en une proportion, exprimée sous forme d'oxyde de cérium, de 0,01 % à 1,0 % en poids par rapport au dioxyde de titane dans la suspension ;
(b) d'un acide ou d'un alcali en une proportion suffisante pour transformer le composé du cérium mentionné en (a) en oxyde de cérium, déposant ainsi de l'oxyde de cérium sur les particules de dioxyde de titane ; et
(c) d'un silicate hydrosoluble et d'un acide minéral, déposant ainsi, à un pH d'au moins environ 8, de la silice amorphe dense sur les particules de dioxyde de titane, le silicate hydrosoluble étant ajoutée en une proportion, exprimée sous forme de silice, de 1% à 8 % en poids par rapport au dioxyde de titane dans la suspension.

7. Procédé selon la revendication 6, dans lequel le composé du cérium hydrosoluble mentionné en (a) est du nitrate de cérium.

8. Procédé selon la revendication 6 ou 7, dans lequel, en (b), on ajoute une solution aqueuse d'hydroxyde de sodium.

9. Procédé selon l'une quelconque des revendications 6, 7 ou 8, dans lequel, en (c), le silicate hydrosoluble est une solution aqueuse de silicate de sodium et l'acide minéral est une solution aqueuse d'acide sulfurique.

10. Procédé selon l'une quelconque des revendications 7 à 9, dans lequel du nitrate de cérium est ajouté en une proportion, exprimée sous forme d'oxyde de cérium, de 0,02 % à 0,5 % en poids par rapport au dioxyde de titane dans la suspension.

11. Procédé selon la revendication 9 ou 10, dans lequel la solution aqueuse de silicate de sodium est ajoutée en une proportion, exprimée sous forme de silice, de 1 % à 6 % en poids par rapport au dioxyde de titane dans la suspension.

12. Procédé selon l'une quelconque des revendications 6 à 11, dans lequel le silicate hydrosoluble et l'acide minéral mentionnés en (c) sont ajoutés à la suspension aqueuse de particules de dioxyde de titane de type rutile avant le composé du cérium hydrosoluble mentionné en (a) et l'acide ou l'alcali mentionné en (b).

13. Procédé selon l'une quelconque des revendications 6 à 12, comprenant en outre l'addition d'une solution aqueuse d'un composé de l'aluminium acide ou alcalin, suivie par l'addition respective d'une solution aqueuse d'un alcali ou d'un acide, en une proportion suffisante pour réagir avec le composé de l'aluminium, amenant ainsi le revêtement extérieur d'alumine hydratée à se déposer, la solution aqueuse du composé de l'aluminium étant ajoutée en une proportion, exprimée sous forme d'alumine, de 2 % à 4 % en poids par rapport au dioxyde de titane dans la suspension.

14. Procédé selon la revendication 13, dans lequel le composé de l'aluminium est ajouté en une proportion, exprimée sous forme d'alumine, de 2,5 % à 3,5 % en poids par rapport au dioxyde de titane dans la suspension.

15. Procédé selon la revendication 13 ou 14, dans lequel on ajoute une solution aqueuse d'aluminate de sodium puis une solution aqueuse d'acide sulfurique.

16. Procédé selon l'une quelconque des revendications 6 à 15, comprenant en outre la filtration, le lavage et le séchage du pigment dioxyde de titane obtenu.
